Europäisches Patentamt

European Patent Office

Office européen des brevets

(19)

(11) Veröffentlichungsnummer : **0 001 971**
**B2**

(12) # NEUE EUROPÄISCHE PATENTSCHRIFT

(45) Veröffentlichungstag der neuen Patentschrift :
**08.07.87**

(21) Anmeldenummer : **78100975.8**

(22) Anmeldetag : **25.09.78**

(51) Int. Cl.⁴ : **C 01 B 21/14**, B 01 J 19/02,
C 22 C 38/44

(54) Verfahren zur Herstellung von Hydroxylammoniumsalzen in Reaktionsgefässen aus Edelstahl.

(30) Priorität : **27.09.77 DE 2743346**

(43) Veröffentlichungstag der Anmeldung :
**30.05.79 Patentblatt 79/11**

(45) Bekanntmachung des Hinweises auf die Patenterteilung : **05.08.81 Patentblatt 81/31**

(45) Bekanntmachung des Hinweises auf die Entscheidung
über den Einspruch : **08.07.87 Patentblatt 87/28**

(84) Benannte Vertragsstaaten :
**BE CH DE FR GB NL**

(56) Entgegenhaltungen :
**DE-A- 2 100 036**
**DE-B-        9 676**
**DE-C-     896 362**
**DE-C-     968 363**
**Technical Information Nr. A14E, Feb. 1973, Deutsche
Edelstahlwerke AG, Stahltechnologische Zentrale
Krefeld**
**Hastelloy alloy B-2, Cabot Corp., Stellite Division,
1977, S. 1-11**
**Nitrogen Nr. 50, Nov/Dez 1967, S. 30-31**
**Resistance of Hastelloy Alloys to Corrosion by Inorganic Acids, Cabot Corp., Stellite Division, 1974, Dez. 11,
S. 11**
**Hydroxylamine and its Salts, Manufacturing Chemist
and Aerosol News, August 1964, S. 29-32**
**Corrosion Resistance of Stainless Stells in Aqueous
Solutions, Avesta Jernwerks AG, 1967, S. 15-17**
**Corrosion Data Survey, 5th ed. S. 138-9, Association
of Corrosive Engine**
**Die Akte enthält technische Angaben, die nach dem
Eingang der Anmeldung eingereicht wurden und die
nicht in dieser Patentschrift enthalten sind.**

(73) Patentinhaber : **BASF Aktiengesellschaft
Carl-Bosch-Strasse 38
D-6700 Ludwigshafen (DE)**

(72) Erfinder : **Rapp, Guenther, Dr.
Mundenheimer Strasse 174
D-6700 Ludwigshafen (DE)**
Erfinder : **Thomas, Erwin
Borngasse 12
D-6713 Freinsheim (DE)**
Erfinder : **Muenster, Rolf
Herrmann-Ehlers-Strasse 2
D-6720 Speyer (DE)**

EP 0 001 971 B2

**Beschreibung**

Gegenstand der Erfindung ist ein Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur wobei man die Umsetzung in einem Reaktionsgefäß aus bestimmten Werkstoffen durchführt.

Bei der Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur besteht das Problem, daß das saure reduzierende Reaktionsgemisch außerordentlich korrosiv ist. Es steht nur eine beschränkte Auswahl von Werkstoffen zur Verfügung, die eine ausreichende Korrosionsbeständigkeit haben. Geeignet haben sich erwiesen Kunststoffe, wie Polyvinylchlorid, Polyäthylen, Polypropylen, Polytetrafluoräthylen sowie Kunst- und Naturkautschuke. Weiterhin sind für solche korrosive Medien mit Email, Graphit, Platin oder Tantal ausgekleidete Vorrichtungen geeignet.

Die Nachteile dieser Werkstoffe bei Verwendung im Reaktorbau sind teils hoher Preis, schwierige Verarbeitbarkeit, teils störende Eigenschaften wie Zerbrechlichkeit, Altersversprödung, Stoß- und Schlagempfindlichkeit, geringe mechanische Festigkeit. Diese Eigenschaften erschweren den Bau von Reaktoren zur Hydroxylammoniumsalz Herstellung vor allem dann, wenn die Synthese unter Druck ausgeführt werden soll.

Auch eine Reihe von handelsüblichen Stahllegierungen hoher mechanischer Festigkeit und guter Korrosionsbeständigkeit haben sich bei der Synthese von Hydroxylamin durch katalytische Reduktion von Stickstoffmonoxid in wäßrigen Mineralsäuren nicht bewährt. Chrom-Nickel-Stähle mit Titanzusatz (Werkstoff 1 4541) werden unter dem Einfluß des reduzierenden, stark sauren wäßrigen Reaktionsmediums korrodiert. Andere korrosionsfeste Chrom-Nickel-Stähle mit Molybdänzusatz, die Kupfe, enthalten und die unter normalen Anwendungsbedingungen besonders stabil gegen verdünnte Schwefelsäure sind, zeigen ebenfalls Korrosionserscheinungen. Doch besonders nachteilig ist die ungünstige Beeinflussung des Reaktionsverlaufs durch in Lösung gehende Grundstoffe der Metallegierungen.

Es war deshalb die technische Aufgabe gestellt, bei der Herstellung von Hydroxylammoniumsalzen durch Reduktion von Stickstoffmonoxid mit Wasserstoff in saurem Medium die Umsetzung in Reaktionsgefäßen durchzuführen, die praktisch nicht korrodieren, stoß- und schlagunempfindlich sind, alterungsbeständig und gut bearbeitbar sind und hohe mechanische Festigkeit besitzen um die Reaktion auch unter erhöhtem Druck durchführen zu können.

Diese Aufgabe wird gelöst in einem Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur, wobei man die Umsetzung in Reaktionsgefäßen durchführt, deren Wandungen aus an sich bekannten kupferfreien molybdänhaltigen, austenitischen Chrom-Nickel-Stählen bestehen, die einen Gehalt von 16 bis 28 Gew. % Chrom, 10 bis 50 Gew. % Nickel, 1 bis 4 Gew. % Molybdän, höchstens 0,05 Gew. % Kohlenstoff haben sowie zusätzlich bis zu 0,5 Gew. % Stickstoff enthalten.

Die erfindungsgemäße Arbeitsweise hat den Vorteil, daß die verwendeten Werkstoffe gegenüber dem Reaktionsmedium eine hervorragende Korrosionsbeständigkeit besitzen und keine den Reaktionsablauf schädigenden Stoffe an das Reaktionsmedium abgeben. Darüber hinaus sind die verwendeten Werkstoffe alterungs-, schlag- und stoßunempfindlich und besitzen eine hervorragende mechanische Festigkeit. Sie lassen sich gut verarbeiten und haben eine lange Lebensdauer.

In der Regel geht man von Wasserstoff/Stickstoffmonoxidgemischen aus, in denen das Molverhältnis von Wasserstoff zu Stickstoffmonoxid > 1 ist. Vorzugsweise hält man ein Molverhältnis von 1,5 : 1 bis 6 : 1 ein. Besonders gute Ergebnisse erhält man, wenn man darauf achtet, daß in der Reaktionszone ein Molverhältnis von Wasserstoff zu Stickstoffmonoxid von 3,5 bis 5 : 1 aufrecht erhalten wird.

Im allgemeinen verwendet man als Mineralsäuren nicht reduzierende starke Mineralsäuren wie Perchlorsäure, Salpetersäure, Schwefelsäure oder Phosphorsäure. Geeignet sind auch deren saure Salze, wie Ammoniumbisulfat. Besonders bevorzugt wird Schwefelsäure verwendet. In der Regel geht man von 4 bis 6 normalen wäßrigen Säuren aus und läßt im Verlauf der Reaktion die Säurekonzentration nicht unter 0,2 n abfallen.

Die Umsetzung führt man vorteilhaft bei Temperaturen von 30 bis 80 °C durch. Besonders bewährt haben sich Temperaturen von 40 bis 60 °C. In der Regel führt man die Umsetzung bei Atmosphärendruck oder erhöhtem Druck, z. B. bis zu 300 bar durch.

Als Platinkatalysatoren werden im allgemeinen Trägerkatalysatoren verwendet. Besonders bewährt hat sich Platin auf Kohleträger, insbesondere auf Graphit. Die Katalysatoren werden in feinverteilter Form als Suspension angewandt. Vorzugsweise hat ein solcher Katalysator einen Gehalt von 0,2 bis 5 Gew. % Platin. Vorteilhaft enthalten die Katalysatoren zusätzlich ein oder mehrere Elemente der 5 und/oder 6. Hauptgruppe des Periodischen Systems mit einem Atomgewicht > 31, ferner Blei und/oder Quecksilber als vergiftende Mittel. Geeignete Katalysatoren und deren Herstellung werden beispielsweise beschrieben in der DE-B 10 88 037, DE-C 920 963, 956 038, 945 752.

Die Umsetzung wird in Reaktionsgefäßen durchgeführt, deren Wandungen aus an sich bekannten

2

kupferfreien, molybdänhaltigen austenitischen Chrom-Nickel-Stählen bestehen, die einen Gehalt von 16 bis 28 Gew. % Chrom, 10 bis 50 Gew. % Nickel, 1 bis 4 Gew. % Molybdän und höchstens 0,05 Gew. % Kohlenstoff haben sowie zusätzlich bis zu 0,5 Gew. % Stickstoff enthalten. Es versteht sich, daß der jeweilige Rest aus Eisen besteht. Unter kupferfrei ist zu verstehen, daß den Legierungen Kupfer nicht als Legierungsmetall zugegeben wird. Das schließt jedoch nicht aus, daß natürliche Mengen an Kupfer in den Stählen enthalten sein können, die bei der Stahlherstellung aus Schrott zwangsläufig eingeschleppt werden. Daneben ist auch nicht auszuschließen, daß andere Elemente, wie sie überlicherweise in Stählen vorkommen, wie Mangan oder Silicium, in den Werkstoffen enthalten sind.

Der verwendete Ausdruck Reaktionsgefäße ist im weitesten Umfang zu verstehen. Er beinhaltet nicht nur Wandungen des eigentlichen Reaktionsgefäßes, sondern auch die dazugehörigen Leitungen, Pumpen, Kühler und Rührer. D. h. es sollen sämtliche Wandungen, die mit dem Reaktionsgemisch in Berührung kommen, aus dem erfindungsgemäßen Werkstoff bestehen. Die erfindungsgemäßen Stahllegierungen besitzen alle Vorteile legierter, austenitischer Stähle für den Bau von Vorrichtungen, z. B. Gieß- und Verformbarkeit, gute Bearbeitbarkeit. Verschweißbarkeit, jeweils mit den üblichen Techniken. Die hohe mechanische Festigkeit ermöglicht ihren Einsatz als Werkstoff für Hochdruckreaktoren. Der entscheidende Vorteil liegt neben der Preiswürdigkeit in ihrer hohen Korrosionsbeständigkeit gegenüber dem reduzierenden stark sauren wäßrigen Reaktionsmedium. Es ist überraschend, daß die Hydroxylaminsynthese dann störungsfrei verläuft nachdem die Gefäßwandungen etwa 200 Stunden dem Angriff des Reaktionsmediums unter Reaktionsbedingungen ausgesetzt wurden. Die so erreichte Passivierung kann bislang durch andere bekannte Passivierungsmittel nicht erreicht werden.

Nach dem Verfahren der Erfindung hergestellte Hydroxylammoniumsalze eignen sich zur Herstellung von Cyclohexanonoxim einem Vorprodukt für die Herstellung von Caprolactam.

Das Verfahren nach der Erfindung sei in folgenden Beispielen veranschaulicht.

## Beispiele 1 und 2, Vergleichsbeispiele 1a und 2a

Vier hintereinander geschaltete Reaktionsgefäße werden mit je 6 000 1 4,5 n Schwefelsäure und 150 kg eines 1 Gew. % enthaltenden Platin-Graphit-Katalysators gefüllt. Bei geschlossenen Verbindungsleitungen wird der Inhalt der Reaktionsgefäße mit einem Wasserstoff/Stickstoffmonoxid-Gemisch im Molverhältnis 1,7 : 1 beaufschlagt, daß sich eine Kunzentration an freier Schwefelsäure in den einzelnen Reaktionsgefäßen wie folgt einstellt.

Reaktor 1 3,2 n
Reaktor 2 2,0 n
Reaktor 3 0,95 n
Reaktor 4 0,3 n

Bei nunmehr geöffneten Verbindungsleitungen zwischen den einzelnen Reaktionsgefäßen wird 20 Gewichtsprozentige Schwefelsäure zusammen mit Platinkatalysator in den Reaktor 1 eingeführt und durch die Reaktoren zu einer Trennvorrichtung geleitet. Der von der gebildeten Hydroxylammoniumsulfatlösung abgetrennte Katalysator wird in das Reaktionsgefäß 1 zurückgeleitet. Gleichzeitig wird ein Gemisch aus Wasserstoff und Stickstoffmonoxid der genannten Zusammensetzung parallel durch die Reaktoren 4, 3 und 2 geleitet. Die Abgase aus diesen Reaktoren werden gesammelt und gemeinsam durch den Reaktor 1 geführt. Stündlich erhält man so 380 kg Hydroxylamin als Hydroxylammoniumsulfatlösung bei einer Hydroxylaminausbeute von 93,5 % bezogen auf umgesetztes Stickstoffmonoxid.

In das erste Reaktionsgefäß werden Probestücke verschiedener Edelstahlsorten eingebracht und diese 8 Monate dem Reaktionsmedium ausgesetzt. Nach Entnahme der Werkstoff wird ihr jährlicher Oberflächenabtrag aus Einwirkungsdauer und Gewichtsverlust unter Berücksichtigung der exponierten Oberfläche und Dichte ermittelt. Die Ergebnisse sind aus folgender Tabelle ersichtlich.

(Siehe Tabelle Seite 4 f.)

## Beispiel 3

Man verfährt wie in Beispiel 1 beschrieben, ersetzt in den Vorrichtungen des ersten Reaktors jedoch 3 % der exponierten Werkstofffläche durch den Werkstoff Nr. 1 4465 mit einem Gehalt von 25 % Ni, 25 % Cr, 2,25 % Mo, 0,02 % C, 0,12 % N. Nach 6-monatigem Dauerbetrieb bei einer Schwefelsäurekonzentration von 3,0 bis 3,2 n ist an den Blechen aus Werkstoff Nr. 1 4465 kein Abtrag erkennbar, die Hydroxylaminsynthese verläuft ohne Beeinträchtigung.

## Tabelle

| Werkstoff | Werkstoff Nr. | C | Cr | Ni | Mo | Cu | Ti | Nb | N | jährl. Abtrag (mm) |
|---|---|---|---|---|---|---|---|---|---|---|
| Vergleichs-beispiel 1a | 1.4541 | 0,07 | 18 | 10,5 | — | — | 0,45 | — | — | fast aufgelöst |
| Beispiel 1 | 1.4406 | 0,025 | 17,5 | 12,5 | 2,3 | — | — | — | 0,15 | 0,08 |
| Vergleichs-beispiel 2a | 1.4505 | 0,05 | 18 | 20 | 2,25 | 2,0 | — | 0,63 | — | 0,47 |
| Beispiel 2 | 1.4465 | 0,022 | 25 | 25 | 2,25 | — | — | — | 0,12 | 0,01 |

Vergleichsbeispiel 3

Man verfährt wie in Beispiel 1 beschrieben, ersetzt jedoch in den Vorrichtungen des zweiten Reaktors 2,5 % der exponierten Werkstofffläche durch den Werkstoff Nr. 4 571 mit einem Gehalt von 12 % Ni, 17,5 % Cr, 2,25 % Mo, 0,06 % C, 0,47 % Ti. Bei einer Schwefelsäurekonzentration von 1,9 bis 2,1 n ist nach 14-monatigem Dauerbetrieb am Werkstoff Nr. 14 571 äußerlich wenig Abtrag erkennbar, doch fällt bei der Hydroxylaminsynthese die Ausbeute an Hydroxylamin um 4,5 %, die Ausbeute an unerwünschtem Nebenprodukt Ammonsulfat steigt um 70 % an.

**Patentanspruch**

Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur, dadurch gekennzeichnet, daß man die Umsetzung in Reaktionsgefäßen durchführt, deren Wandungen aus an sich bekannten kupferfreien, molybdänhaltigen austenitischen Chrom-Nickel-Stählen bestehen, die einen Gehalt von 16 bis 28 Gew. % Chrom, 10 bis 50 Gew. % Nickel, 1 bis 4 Gew. % Molybdän, höchstens 0,05 Gew. % Kohlenstoff haben sowie zusätzlich bis zu 0,5 Gew. % Stickstoff enthalten, wobei der Rest, abgesehen von eventuellen Verunreinigungen, aus Eisen besteht, die etwa 200 Stunden dem Angriff des Reaktionsmediums unter Reaktionsbedingungen ausgesetzt waren.

**Claim**

A process for the manufacture of hydroxylammonium salts by catalytic reduction of nitric oxide with hydrogen in a dilute aqueous mineral acid in the presence of a suspended platinum catalyst at an elevated temperature, characterized in that the reaction is carried out in vessels whose walls consist of conventional copper-free molybdenum-containing austenitic chromium-nickel steels which contain from 16 to 28 % by weight of chromium, from 10 to 50 % by weight of nickel, from 1 to 4 % by weight of molybdenum and at most 0.05 % by weight of carbon, together with up to 0.5 % by weight of nitrogen, the balance, apart from any impurities present, consisting of iron, and have been exposed to attack by the reaction medium, under the reaction conditions, for about 200 hours.

**Revendication**

Procédé de préparation de sels d'hydroxylammonium par réduction catalytique de bioxyde d'azote (NO) avec de l'hydrogène dans des acides minéraux aqueux dilués, en présence de catalyseurs de platine en suspension, à température élevée, caractérisé par le fait que l'on effectue la réaction dans des récipients de réaction dont les parois sont en aciers chrome-nickel austénitiques à teneur en molybdène et sans cuivre, connus en soi, qui ont une teneur de 16 à 28 % en poids de chrome, 10 à 50 % de nickel, 1 à 4 % de molybdène, au maximum 0,05 % en poids de carbone, et en plus, jusqu'à 0,5 % en poids d'azote, le reste étant constitué de fer, compte non tenu d'éventuelles impuretés, et qui avaient été soumis pendant environ 200 heures à l'attaque du milieu réactionnel, dans les conditions de la réaction.